# EUROPÄISCHE PATENTANMELDUNG

(11) **EP 4 715 497 A1**
(43) Veröffentlichungstag der Anmeldung: **25.03.2026**
(21) Anmeldenummer: 25203179.4
(22) Anmeldetag: 18.09.2025
(51) Int. Cl.: G05B 19/00, G05B 19/042

(54) **MESSSYSTEM ZUR PROZESSAUTOMATISIERUNG**

(30) Priorität: 23.09.2024 DE 102024127415
(71) Anmelder: VEGA Grieshaber KG, 77709 Wolfach (DE)
(72) Erfinder: SECKINGER, Timo, 78733 Aichhalden (DE)
(74) Vertreter: Maiwald GmbH

(57) **Zusammenfassung**

Messsystem zur Prozessautomatisierung im industriellen oder privaten Umfeld, mit einem ersten Feldgerät zur Erfassung von ersten Prozessmessdaten und einer Rechenanordnung zur Auswertung der erfassten ersten Prozessmessdaten, wobei die Rechenanordnung dazu eingerichtet ist, anhand der Auswertung der erfassten ersten Prozessmessdaten eine neue Einbauposition und/oder eine neue Parametrierung des ersten Feldgeräts zu bestimmen, um das Messergebnis zu verbessern.

## Beschreibung

### BEZUGNAHME AUF VERWANDTE ANMELDUNGEN

Die vorliegende Anmeldung beansprucht die Priorität der deutschen Patentanmeldung Nr. 10 2024 127 415.8, eingereicht am 23. September 2024, die in vollem Umfang durch Bezugnahme in das vorliegende Dokument aufgenommen wird.

### GEBIET DER ERFINDUNG

Die vorliegende Erfindung betrifft die Prozessmesstechnik. Insbesondere betrifft die vorliegende Erfindung ein Messsystem zur Prozessautomatisierung im industriellen oder privaten Umfeld, ein Verfahren zum Betreiben eines Messsystems im industriellen oder privaten Umfeld, ein Programmelement, ein computerlesbares Medium, sowie Trainingsdaten zum Trainieren eines auf einem maschinellen Lernen und/oder künstlicher Intelligenz basierenden Algorithmus zur Verwendung durch ein Messsystem im industriellen oder privaten Umfeld.

### TECHNISCHER HINTERGRUND

In der Prozessautomatisierung im industriellen oder privaten Umfeld werden Feldgeräte verwendet, bei denen es sich beispielsweise um Füllstandmessgeräte, Druckmessgeräte oder Durchflussmessgeräte handelt. Die Füllstandmessgeräte können beispielsweise Füllstandradarmessgeräte sein, welche freistrahlend oder mittels eines geführten Mikrowellensignals den Füllstand bestimmen.

Es hat sich gezeigt, dass die Installation und die Parametrierung der Feldgeräte mitunter großen Einfluss auf die Qualität der Messergebnisse haben kann. Um die Qualität der Messergebnisse zu maximieren, ist mitunter großes Fachwissen erforderlich.

### ZUSAMMENFASSUNG

Vor diesem Hintergrund ist es eine Aufgabe der vorliegenden Offenbarung, die Qualität der Messergebnisse eines Feldgeräts im industriellen und privaten Umfeld zu erhöhen.

Diese Aufgabe wird durch die Merkmale der unabhängigen Patentansprüche gelöst. Weiterbildungen der vorliegenden Offenbarung ergeben sich aus den Unteransprüchen und der folgenden Beschreibung von Ausführungsformen.

Ein erster Aspekt der vorliegenden Offenbarung betrifft ein Messsystem zur Prozessautomatisierung im industriellen und privaten Umfeld. Das Messsystem weist ein erstes Feldgerät auf, das zur Erfassung von ersten Prozessmessdaten eingerichtet ist.

Bei den ersten Prozessmessdaten handelt es sich beispielsweise um Füllstandmessdaten oder Druckmessdaten. Die technische Lehre der vorliegenden Offenbarung ist jedoch auch auf andere Prozessmessdaten anwendbar, sodass vom Schutzumfang nicht nur Füllstand- und Druckmessgeräte umfasst sind, sondern auch andere Messgeräte, bei welchen Einbauort und/oder Parametrierung direkten Einfluss auf die Qualität des Messergebnisses haben kann.

Das Messsystem weist weiterhin eine Rechenanordnung auf, die zur Auswertung der erfassten ersten Prozessmessdaten eingerichtet ist. Hierbei können Teile oder sogar die gesamte Rechenanordnung im ersten Feldgerät integriert sein. Oft wird es aber auch so sein, dass eine der Rechenanordnungen in anderen, benachbarten Feldgeräten integriert sind und/oder in der Cloud oder einer externen Steuereinheit.

Die Rechenanordnung ist dazu eingerichtet, anhand der Auswertung der erfassten ersten Prozessmessdaten eine neue Einbauposition und/oder eine neue Parametrierung des ersten Feldgeräts zu bestimmen, um das Messergebnis zu verbessern.

Die Rechenanordnung ist eingerichtet, aus den erfassten ersten Prozessmessdaten zu erkennen, dass die Einbauposition und/oder die Parametrierung des ersten Feldgeräts geändert werden kann, um das Messergebnis des ersten Feldgeräts zu verbessern. Beispielsweise ist es möglich, dass die Rechenanordnung anhand ihrer Kenntnisse der Messumgebung weiß, wie ein optimales Messergebnis aussehen müsste. Durch ihre Analyse der erfassten Prozessmessdaten kann sie bestimmen, welche Änderungen an der Einbauposition und/oder der Parametrierung des ersten Feldgeräts vorzunehmen sind, um sein Messergebnis entsprechend zu verbessern.

Insbesondere ist es möglich, dass die Rechenanordnung Prozessmessdaten auch von anderen Feldgeräten erhält oder vorliegen hat. In einem einfachen Fall kann sie somit durch Vergleich der Messgeräte der verschiedenen Feldgeräte bestimmen, welches Feldgerät die jeweils beste Einbauposition und/oder Parametrierung aufweist und diese dann dem Benutzer für die anderen Feldgeräte vorschlagen.

Auch kann die Rechenanordnung eingerichtet sein, die Neuparametrierung eines entsprechenden Feldgeräts selbstständig vorzunehmen, um das Messergebnis zu verbessern.

Gemäß einer Ausführungsform der vorliegenden Offenbarung handelt es sich bei der neuen Einbauposition des ersten Feldgeräts um einen neuen Einbauort des ersten Feldgeräts, beispielsweise in einem Tank oder Silo.

Gemäß einer weiteren Ausführungsform der vorliegenden Offenbarung weist das erste Feldgerät in der neuen Einbauposition einen anderen Einbauwinkel auf, als in der vorherigen Einbauposition, in welcher die ersten Prozessmessdaten erfasst wurden. Bei diesem Einbauwinkel kann es sich beispielsweise um einen Drehwinkel um die Längsachse des Feldgeräts handeln. Ist das Feldgerät in eine Behälteröffnung eingeschraubt, kann es beispielsweise um 90 Grad verdreht werden. Der Einbauwinkel kann aber auch mit dem Abstrahlwinkel des Messsignals zusammenhängen, sodass das Feldgerät in der neuen Einbauposition gegenüber der alten Einbauposition verkippt ist und somit eine andere Abstrahlrichtung aufweist.

Gemäß einer weiteren Ausführungsform der vorliegenden Offenbarung umfasst die neue Parametrierung des ersten Feldgeräts eine neue Linearisierung des ersten Feldgeräts. Der Begriff der Linearisierung ist im vorliegenden technischen Gebiet bekannt und entspricht im Wesentlichen einer Eichung des Feldgeräts.

Die Parametrierung kann aber auch einen sog. Min-Max-Abgleich betreffen, also eine erneute Festlegung des Bereichs, in welchem das Feldgerät messen soll. Im Falle eines Füllstandmessgeräts handelt es sich hierbei um die niedrigste und die höchste Füllhöhe.

Eine weitere Ausführungsform der vorliegenden Offenbarung betrifft das oben beschriebene Messsystem, welches weiterhin ein zweites Feldgerät aufweist, das eingerichtet ist zur Erfassung von zweiten Prozessmessdaten. Die Rechenanordnung ist hierbei zur Auswertung auch der erfassten zweiten Prozessmessdaten eingerichtet. Ebenso ist sie eingerichtet, anhand der Auswertung der erfassten ersten und zweiten Prozessmessdaten eine neue Einbauposition und/oder eine neue Parametrierung des ersten Feldgeräts zu bestimmen, um das Messergebnis weiter zu verbessern.

Neben dem ersten Feldgerät und dem zweiten Feldgerät können noch weitere Feldgeräte vorgesehen sein, welche alle mit der Rechenanordnung kommunizieren können, um ihr ihre entsprechenden Prozessmessdaten zu übermitteln.

Gemäß einer weiteren Ausführungsform der vorliegenden Offenbarung ist die neue Einbauposition ungleich zur Einbauposition des ersten Feldgeräts und des zweiten Feldgeräts. Es kann aber auch der Fall auftreten, dass die neue Einbauposition des ersten Feldgeräts der Einbauposition des zweiten Feldgeräts entspricht.

Gemäß einer weiteren Ausführungsform der vorliegenden Offenbarung ist die neue Parametrierung ungleich zur Parametrierung des ersten Feldgeräts und zur Parametrierung des zweiten Feldgeräts. Es kann aber auch vorgesehen sein, dass die neue Parametrierung (des ersten Feldgeräts) der Parametrierung des zweiten Feldgeräts entspricht.

Gemäß einer weiteren Ausführungsform der vorliegenden Offenbarung sind das erste Feldgerät und das zweite Feldgerät baugleich oder zumindest bauähnlich. Im Falle von Füllstandmessgeräten wird es in diesem Fall so sein, dass auch die Behälter/Silos, in welchen das erste und das zweite Feldgerät eingebaut sind, baugleich oder zumindest ähnlich sind. Zwingend erforderlich ist dieses jedoch nicht.

Gemäß einer weiteren Ausführungsform der vorliegenden Offenbarung weist die Rechenanordnung eine Cloud und/oder eine externe Steuereinheit auf.

Gemäß einer weiteren Ausführungsform der vorliegenden Offenbarung handelt es sich bei dem ersten Feldgerät und/oder bei dem zweiten Feldgerät (und/oder möglichen weiteren Feldgeräten) um ein Füllstandradar, beispielsweise ein freistrahlendes Füllstandradar oder ein Füllstandradar, das geführte Signale zur Messung des Füllstands einsetzt, oder ein Druckmessgerät, insbesondere ein Differenzdruckmessgerät.

Gemäß einer weiteren Ausführungsform der vorliegenden Offenbarung sind die erfassten ersten Prozessmessdaten und/oder die erfassten zweiten Prozessmessdaten Echomessdaten, aus denen sich Echokurven berechnen lassen.

Gemäß einer weiteren Ausführungsform der vorliegenden Offenbarung ist die Rechenanordnung dazu eingerichtet, die neue Einbauposition und/oder die neue Parametrierung des ersten Feldgeräts und/oder des zweiten Feldgeräts unter Verwendung eines auf maschinellem Lernen und/oder künstlicher Intelligenz basierenden Algorithmus festzustellen.

Gemäß einer weiteren Ausführungsform der vorliegenden Offenbarung ist der auf maschinellem Lernen und/oder künstlicher Intelligenz basierende Algorithmus ein vortrainierter Algorithmus, der auf einer Datenspeicheranordnung des Feldgeräts gespeichert ist.

Gemäß einer weiteren Ausführungsform der vorliegenden Offenbarung ist die Rechenanordnung dazu eingerichtet, den auf maschinellem Lernen und/oder künstlicher Intelligenz basierenden Algorithmus während des Betriebs des Feldgeräts zu trainieren.

Ein zweiter Aspekt der vorliegenden Offenbarung betrifft ein Verfahren zum Betreiben eines Messsystems im industriellen oder privaten Umfeld, beispielsweise ein oben beschriebenes Messsystem. Das Verfahren weist hierbei die folgenden Schritte auf: Erfassen von ersten Prozessmessdaten; Auswerten der erfassten ersten Prozessmessdaten; und Bestimmen einer neuen Einbauposition und/oder einer neuen Parametrierung eines ersten Feldgeräts anhand der Auswertung der erfassten ersten Prozessmessdaten, um das Messergebnis des ersten Feldgeräts zu verbessern.

Gemäß einer weiteren Ausführungsform der vorliegenden Offenbarung weist das Verfahren ferner ein Verwenden und/oder Trainieren eines auf maschinellem Lernen und/oder künstlicher Intelligenz basierenden Algorithmus zum Auswerten der erfassten ersten Prozessmessdaten und/oder zum Bestimmen der neuen Einbauposition und/oder der neuen Parametrierung des ersten Feldgeräts auf.

An dieser Stelle sei darauf hingewiesen, dass, wenn weiter oben oder im Folgenden davon die Rede ist, dass die ersten Prozessmessdaten ausgewertet oder anderweitig verarbeitet/analysiert werden, dies, wenn weitere Feldgeräte vorgesehen sind, auch mit den entsprechenden Prozessmessdaten der weiteren Feldgeräte geschehen kann. Grundsätzlich wird das Messergebnis mit höherer Wahrscheinlichkeit verbessert werden, wenn die Prozessmessdaten von möglichst vielen Feldgeräten gesammelt, analysiert und verarbeitet werden.

Ein weiterer Aspekt der vorliegenden Offenbarung betrifft ein Programmelement, das, wenn es auf einer Rechenanordnung eines oben oder im Folgenden beschriebenen Messsystems ausgeführt wird, das Messsystem dazu veranlasst, das oben und im Folgenden beschriebene Verfahren auszuführen.

Ein weiterer Aspekt der vorliegenden Offenbarung betrifft ein computerlesbares Medium, auf dem das oben beschriebene Programmelement gespeichert ist.

Ein weiterer Aspekt der vorliegenden Offenbarung betrifft Trainingsdaten zum Trainieren eines auf einem maschinellen Lernen und/oder künstlicher Intelligenz basierenden Algorithmus zur Verwendung durch ein Messsystem im industriellen oder privaten Umfeld, beispielsweise ein oben und im Folgenden beschriebenes Messsystem, wobei die Trainingsdaten auf den erfassten ersten Prozessmessdaten basieren, zum Trainieren des auf maschinellem Lernen und/oder künstlicher Intelligenz basierenden Algorithmus zum Bestimmen der neuen Einbauposition und/oder der neuen Parametrierung des ersten Feldgeräts.

Das Computerprogrammprodukt und die Trainingsdaten können beliebige der hierin erwähnten Merkmale oder Schritte umfassen, die in Bezug auf den ersten Aspekt der vorliegenden Offenbarung bzw. das Feldgerät oder den zweiten Aspekt der vorliegenden Offenbarung bzw. das Verfahren beschrieben sind oder die dafür analog gelten können.

Beispielsweise können die Trainingsdaten zumindest teilweise während des Betriebs des Feldgeräts erzeugte Trainingsdaten sein. Alternativ oder zusätzlich können die Trainingsdaten zumindest teilweise außerhalb des Messystems, in dem sie verwendet werden, erzeugte Trainingsdaten sein, zum Beispiel in einer Vielzahl von Messsystemen in gleichen oder unterschiedlichen Anwendungen erzeugte Trainingsdaten. Die Trainingsdaten können zudem Eingabedaten umfassen, die die Abweichung feststellen und/oder charakterisieren, wobei die Eingabedaten beispielsweise auf einer manuellen Auswertung der Ursache der Verbesserungsfähigkeit des Messergebnisses während der Wartung eines Feldgeräts basieren. Beispielsweise können die Eingabedaten auch oder alternativ Anweisungen umfassen, die der Algorithmus zum Lernen nutzen soll. Die Eingabedaten können beispielsweise von einem Techniker stammen.

Unter dem Begriff "Prozessautomatisierung im industriellen Umfeld" kann ein Teilgebiet der Technik verstanden werden, welches Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation von Anlagen und die Logistikautomation von Lieferketten. Mit Hilfe von Distanz- und Winkelsensoren werden im Bereich der Logistikautomation Abläufe innerhalb oder außerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Die in den Ansprüchen verwendeten Begriffe sollten so ausgelegt werden, dass sie die weitestmögliche vernünftige Interpretation in Übereinstimmung mit der vorstehenden Beschreibung erhalten. Zum Beispiel sollte die Verwendung des Artikels "ein" oder "der" bei der Einführung eines Elements nicht so ausgelegt werden, dass sie eine Vielzahl von Elementen ausschließt. Ebenso sollte die Erwähnung von "oder" so ausgelegt werden, dass sie eine Vielzahl von Elementen einschließt, so dass die Erwähnung von "A oder B" nicht "A und B" ausschließt, es sei denn, aus dem Kontext oder der vorangehenden Beschreibung geht klar hervor, dass nur eines von A und B gemeint ist. Ferner ist die Formulierung "mindestens eines von A, B und C" als eines oder mehrere Elemente aus einer Gruppe von Elementen zu verstehen, die aus A, B und C besteht, und nicht so auszulegen, dass mindestens eines von jedem der aufgeführten Elemente A, B und C erforderlich ist, unabhängig davon, ob A, B und C als Kategorien oder auf andere Weise miteinander verbunden sind. Darüber hinaus sollte die Erwähnung von "A, B und/oder C" oder "mindestens eines von A, B oder C" so ausgelegt werden, dass sie jede einzelne Einheit der aufgeführten Elemente, z. B. A, jede Teilmenge der aufgeführten Elemente, z. B. A und B, oder die gesamte Liste der Elemente A, B und C umfasst.

Im Folgenden werden mit Verweis auf die Figuren weitere Ausführungsformen der vorliegenden Offenbarung beschrieben. Die Darstellungen in den Figuren sind schematisch und nicht maßstäblich. Werden in der folgenden Figurenbeschreibung die gleichen Bezugszeichen verwendet, so bezeichnen diese gleiche oder ähnliche Elemente.

### KURZE BESCHREIBUNG DER FIGUREN

Fig. 1 zeigt ein Messsystem gemäß einer Ausführungsform der vorliegenden Offenbarung.
Fig. 2 zeigt ein Flussdiagramm eines Verfahrens gemäß einer Ausführungsform der vorliegenden Offenbarung.
Fig. 3 zeigt eine weitere Darstellung eines Messsystems gemäß einer Ausführungsform der vorliegenden Offenbarung.

Die Figuren 4A bis 4C zeigen Echokurven der in Fig. 3 gezeigten Feldgeräte.

### DETAILLIERTE BESCHREIBUNG VON AUSFÜHRUNGSFORMEN

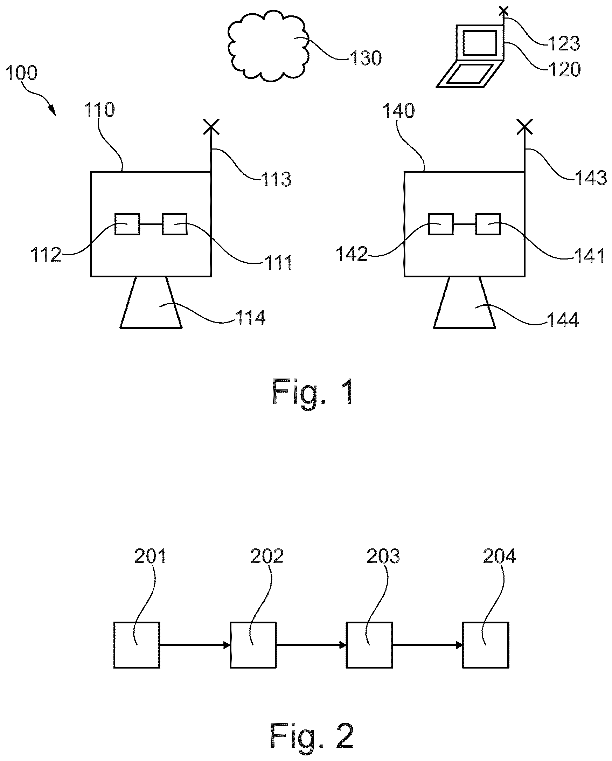

Fig. 1 zeigt ein Messsystem 100 zur Prozessautomatisierung im industriellen oder privaten Umfeld. Das Messsystem 100 weist zwei (oder mehr) Feldgeräte 110, 140 auf, die jeweils zur Erfassung von Prozessmessdaten, beispielsweise Füllständen, eingerichtet sind. Es kann sich aber auch um Druckmessgeräte, Durchflussmessgeräte oder andere Messgeräte handeln.

Jedes der Feldgeräte 110, 140 weist eine Rechenanordnung 111, 141 auf, die mit einem Datenspeicher 112, 142 verbunden ist. Die oben beschriebenen Elemente bilden die Rechenanordnung jedoch nur teilweise aus. Die übrigen Bestandteile der Rechenanordnung umfassen eine externe Steuereinheit 120 und eine Cloud 130. Diese verschiedenen Elemente sind kommunikativ miteinander verbunden, beispielsweise über eine drahtlose Kommunikationsverbindung über die Antennen 113, 143, 123 und/oder (nicht dargestellt) eine drahtgebundene Kommunikationsverbindung.

Die in Fig. 1 gezeigten Feldgeräte sind Füllstandradargeräte mit entsprechenden Antennen 114, 144, über welche die Radarmesssignale abgestrahlt und wieder empfangen werden.

Fig. 2 zeigt ein Flussdiagramm eines Verfahrens gemäß einer Ausführungsform der vorliegenden Offenbarung. In Schritt 201 erfolgt das Erfassen von ersten Prozessmessdaten durch ein erstes Feldgerät und zweiten Prozessmessdaten durch ein zweites Feldgerät. In Schritt 202 werden die ersten und zweiten Prozessmessdaten ausgewertet und mitunter miteinander verglichen. In Schritt 203 wird bestimmt, anhand der Auswertung der erfassten ersten und zweiten Prozessmessdaten, dass eine neue Einbauposition und/oder eine neue Parametrierung des ersten Feldgeräts und/oder des zweiten Feldgeräts zu einer Verbesserung dessen Messergebnisses führen kann. In Schritt 204 wird die neue Einbauposition und/oder werden die neuen Parametrierdaten dem Benutzer mitgeteilt.

An dieser Stelle sei darauf hingewiesen, dass es sich bei dem Verfahren um ein computerimplementiertes Verfahren handelt, welches zumindest in einigen oder in allen Ausführungsformen kein menschliches Zutun benötigt, sondern vollautomatisch durch das Messsystem ausgeführt werden kann.

In einem vorgeschalteten Schritt können die erfassten Prozessmessdaten auch zum Trainieren eines auf maschinellem Lernen und/oder künstlicher Intelligenz basierenden Algorithmus zum Auswerten der erfassten ersten/zweiten Prozessmessdaten und/oder zum Bestimmen der neuen Einbaupositionen und/oder der neuen Parametrierungen des ersten/zweiten Feldgeräts verwendet werden.

Das Verfahren ermittelt somit aus einem oder mehreren Sensordatensätzen von einem oder mehreren Feldgeräten (z. B. Echokurven) die beste Montageposition auf baugleichen bzw. ähnlichen Silos/Tanks und informiert den Anwender/Anlagenbetreiber über die optimale Sensorposition, um ein besseres/stabileres Messergebnis zu erzielen.

Auf diese Weise kann der Anwendungsprozess optimiert und stabilisiert werden, um möglichen Ausfällen und Störungen im Prozess vorzubeugen.

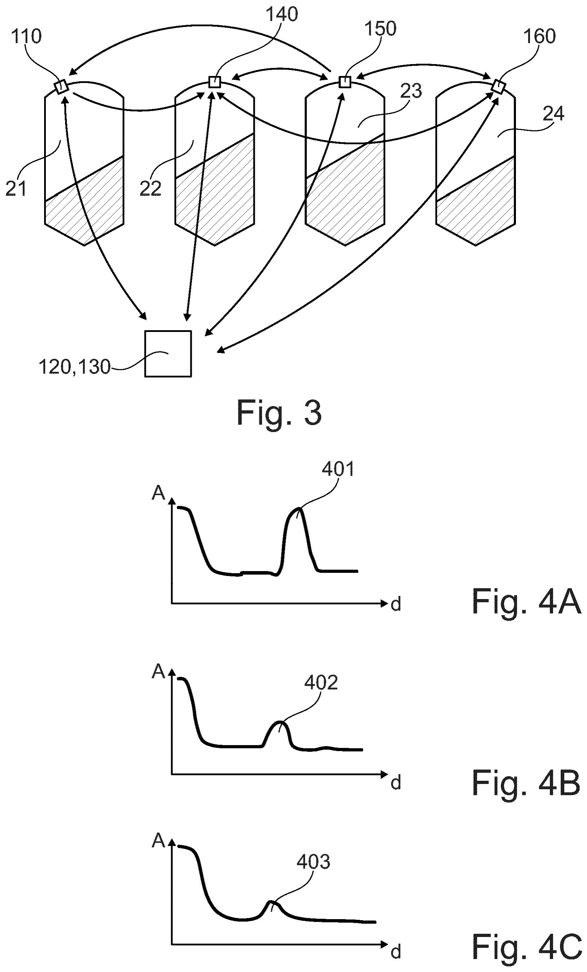

Fig. 3 zeigt eine konkrete Anwendung mit vier Schüttgutsilos 21, 22, 23, 24, in deren Deckenbereichen jeweils ein Feldgerät in Form eines Füllstandmessgeräts 110, 140, 150, 160 eingebaut ist. Hierbei unterscheiden sich die Einbaupositionen voneinander. Lediglich die Geräte 140 und 150 befinden sich an derselben Position.

Sämtliche Feldgeräte können miteinander kommunizieren und Prozessmessdaten oder daraus abgeleitete Informationen austauschen. Auch können sie mit einem externen Steuergerät oder einer Cloud 120, 130 kommunizieren und ihr ihre Prozessmessdaten oder daraus abgeleitete Daten übertragen. Die Cloud/das externe Steuergerät sammelt die Daten der unterschiedlichen Feldgeräte, analysiert sie, vergleicht sie miteinander und leitet daraus die besten Einbaupositionen/Parametrierungen ab, die dann dem entsprechenden Feldgerät oder einem Benutzer vor Ort übertragen werden. So kann beispielsweise vorgesehen sein, dass auf dem entsprechenden Feldgerät die Einbauposition angezeigt wird. Gleichzeitig kann der Benutzer darüber informiert werden, beispielsweise indem das Feldgerät ein Leuchtzeichen abgibt oder er eine Nachricht auf seinem Mobilgerät erhält. Das Steuergerät/die Cloud kann eingerichtet sein, die neue Parametrierung direkt in das Feldgerät einzuspielen, sodass eine Benutzerinteraktion nicht erforderlich ist.

Auch kann vorgesehen sein, dass die Rechenanordnung dem Benutzer eine neue Einbauposition für ein bestimmtes Feldgerät mitteilt, auch wenn noch nicht klar ist, ob diese zu einer Verbesserung des Messergebnisses führt. Dies kann beispielsweise insbesondere dann der Fall sein, wenn der Benutzer sämtliche Feldgeräte im entsprechenden Silo/Tank an derselben Stelle eingebaut hat, sodass grundsätzlich alle Messergebnisse ähnlich ausfallen, wenn die Silos gleich hoch befüllt sind. Trotzdem kann es in diesem Falle sei, dass die Rechenanordnung feststellt, dass die Messergebnisse noch nicht optimal sind und den Benutzer daraufhin dazu anregt, einzelne Feldgeräte an einem anderen Ort einzubauen. Ebenso kann die Rechenanordnung in diesem Fall die Parametrierung eines oder mehrere der Feldgeräte selbstständig ändern, um zu versuchen, dadurch eine Verbesserung des jeweiligen Messergebnisses herbeizuführen.

Somit ist es möglich, mittels vernetzter Feldgeräte/Sensoren entweder direkt oder mithilfe einer übergeordneten Einheit, wie einer Steuereinheit 120 oder einer Cloud 130, die jeweils optimale Montageposition in einem digital vernetzten Verbund von Sensoren in baugleichen oder stark ähnlichen Tanks oder Silos oder anderen Messstellen, wie z. B. Kanalschächten, mittels der im digital vernetzten Verbund befindlichen Sensoren zu identifizieren.

Die Sensorik und/oder die übergeordneten Systeme, wie die Steuereinheit oder das Cloudsystem, sind entweder über Kabel und/oder eine Funkverbindung vernetzt. Die Geräte analysieren gemeinsam die von den einzelnen Sensoren gewonnenen Informationen, wie z. B. die Echokurven der Radarsensoren und deren Konfigurationen/Parametrierungen.

Das Messsystem gibt, nachdem genügend Daten der einzelnen Sensoren gesammelt und analysiert wurden, eine Empfehlung an den Anlagenbetreiber/Anwender ab, welche der mindestens zwei Positionen auf der jeweiligen Messstelle die bessere darstellt, um einen dauerhaft sicheren Betrieb ohne Messfehler zu gewährleisten.

Sollten beide mechanischen Montagepositionen identisch sein, können immer noch eingestellte Parameter der Sensoren angeglichen/verglichen und optimiert bzw. zwischen den einzelnen Sensoren synchronisiert werden, um die Messungen im Gesamten zu verbessern.

Diese Verbesserungsmöglichkeit wird ebenfalls dem Anlagenbetreiber/Anwender vorgeschlagen.

Der Optimierungsvorschlag selbst kann entweder über das Display der Sensoren, ein Display am übergeordneten System oder direkt in dem Cloudsystem dem Anwender kommuniziert werden.

Wichtig ist weiterhin, dass die Intelligenz nicht nur unbedingt in der Cloud/Steuerung/Steuergerät liegt, sondern dass die Sensoren auch untereinander schon einfache Analysen bezüglich der besseren Montageposition/Einstellung durchführen und das Ergebnis auch weitergeben können.

Als Hauptanwendung ist die vorausschauende Wartung/Optimierung zu sehen. An dieser Stelle sei darauf hingewiesen, dass die richtige Montageposition, also die mechanische Ausrichtung des Sensors zur Messstelle, also z. B. zum Tank/Silo/Kanalschacht, etwa 90 % der Messsicherheit ausmacht. Das bedeutet, dass eine schlechte Montageposition mit einer Neukonfiguration des Sensors unter Umständen nur bedingt oder gar nicht ausgeglichen werden kann.

Fig. 4A bis 4C zeigen beispielhaft drei Echokurven zu den in Fig. 3 gezeigten drei verschiedenen Montagepositionen der Feldgeräte 110, 140, 150 und 160.

So erkennt man in Fig. 4A einen ausgeprägten Peak 401, der in der Echokurve durch die Reflexion an der Schüttgutoberfläche hervorgerufen wird. Diese Echokurve wurde vom Feldgerät 110 im Silo 21 erfasst, das sich an einer sehr guten Montageposition zu befinden scheint.

In Fig. 4B ist eine Echokurve gezeigt, wie sie beispielsweise von den Feldgeräten 140 oder 150 erfasst wird. Diese beiden Feldgeräte befinden sich in einer etwas schlechteren Montageposition, was man an der im Vergleich zu Fig. 4A niedrigeren Amplitude 402 des Schüttgutechos erkennt.

In Fig. 4C ist die vom Feldgeräte 160 erfasste Echokurve 403 gezeigt, die schon fast im Rauschen untergeht, da sich dieses Feldgerät aufgrund der schrägen Schüttgutoberfläche in einer ungünstigen Montageposition befindet.

Die Rechenanordnung wird sich in diesem Fall für die Position des Sensors 110 entscheiden, da die Echokurve dieses Sensors die beste Reflexion des Mediums im Vergleich zu den beiden anderen möglichen mechanischen Montagepositionen zeigt. Die Empfehlung des Messsystems ist also, alle Sensoren mechanisch auf die Position des Sensors 110 zu verlagern, um die bestmögliche Messperformance zu erreichen.

## Patentansprüche

1. Messsystem (100) zur Prozessautomatisierung im industriellen oder privaten Umfeld, aufweisend:
ein erstes Feldgerät (110), eingerichtet zur Erfassung von ersten Prozessmessdaten;
eine Rechenanordnung (111, 141, 120, 130), eingerichtet zur Auswertung der erfassten ersten Prozessmessdaten;
wobei die Rechenanordnung (111, 141, 120, 130) dazu eingerichtet ist, anhand der Auswertung der erfassten ersten Prozessmessdaten eine neue Einbauposition und/oder eine neue Parametrierung des ersten Feldgeräts (110) zu bestimmen, um das Messergebnis zu verbessern.

2. Messsystem (100) nach Anspruch 1,
wobei die neue Einbauposition des ersten Feldgeräts (110) ein neuer Einbauort des ersten Feldgeräts (110) ist.

3. Messsystem (100) nach Anspruch 1 oder 2,
wobei das erste Feldgerät in der neuen Einbauposition einen anderen Einbauwinkel aufweist.

4. Messsystem (100) nach einem der vorhergehenden Ansprüche,
wobei die neue Parametrierung des ersten Feldgeräts (110) eine neue Linearisierung des ersten Feldgeräts (110) umfasst.

5. Messsystem (100) nach einem der vorhergehenden Ansprüche, weiter aufweisend:
ein zweites Feldgerät (140), eingerichtet zur Erfassung von zweiten Prozessmessdaten;
wobei die Rechenanordnung (111, 141, 120, 130) zur Auswertung der erfassten zweiten Prozessmessdaten eingerichtet ist;
wobei die Rechenanordnung (111, 141, 120, 130) dazu eingerichtet ist, anhand der Auswertung der erfassten ersten und zweiten Prozessmessdaten eine neue Einbauposition und/oder eine neue Parametrierung des ersten Feldgeräts (110) zu bestimmen, um das Messergebnis zu verbessern.

6. Messsystem (100) nach einem der vorhergehenden Ansprüche,
wobei die neue Einbauposition ungleich ist zur Einbauposition des ersten Feldgeräts (110) und zur Einbauposition des zweiten Feldgeräts (140).

7. Messsystem (100) nach einem der vorhergehenden Ansprüche,
wobei die neue Parametrierung ungleich ist zur Parametrierung des ersten Feldgeräts (110) und zur Parametrierung des zweiten Feldgeräts (14).

8. Messsystem (100) nach einem der Ansprüche 5 bis 7,
wobei das erste Feldgerät (110) und das zweite Feldgerät (140) baugleich oder bauähnlich sind.

9. Messsystem (100) nach einem der vorhergehenden Ansprüche,
wobei die Rechenanordnung (111, 120, 130) eine Cloud (130) und/oder eine externe Steuereinheit (120) aufweist.

10. Messsystem (100) nach einem der vorhergehenden Ansprüche,
wobei das erste Feldgerät (110) und/oder das zweite Feldgerät (140) ein Füllstandradar, insbesondere ein freistrahlendes oder geführtes Füllstandradar, oder ein Druckmessgerät, insbesondere ein Differenzdruckmessgerät, ist.

11. Messsystem (100) nach einem der vorhergehenden Ansprüche,
wobei die erfassten ersten Prozessmessdaten und/oder die erfassten zweiten Prozessmessdaten Echomessdaten sind, aus denen sich Echokurven berechnen lassen.

12. Messsystem (100) nach einem der vorhergehenden Ansprüche,
wobei die Rechenanordnung (111, 141, 120, 130) dazu eingerichtet ist, die neue Einbauposition und/oder die neue Parametrierung des ersten Feldgeräts (110) und/oder des zweiten Feldgeräts unter Verwendung eines auf maschinellem Lernen und/oder künstlicher Intelligenz basierenden Algorithmus festzustellen.

13. Messsystem (100) nach Anspruch 12,
wobei der auf maschinellem Lernen und/oder künstlicher Intelligenz basierende Algorithmus ein vortrainierter Algorithmus ist, der auf einer Datenspeicheranordnung (112, 142) des Feldgeräts (110) gespeichert ist.

14. Messsystem (100) nach einem der Ansprüche 12 oder 13,
wobei die Rechenanordnung (13) dazu eingerichtet ist, den auf maschinellem Lernen und/oder künstlicher Intelligenz basierenden Algorithmus während des Betriebs des Feldgeräts (110) zu trainieren.

15. Verfahren zum Betreiben eines Messsystems (100) im industriellen oder privaten Umfeld, aufweisend die folgenden Schritte:
Erfassen von ersten Prozessmessdaten;
Auswerten der erfassten ersten Prozessmessdaten;
Bestimmen, anhand der Auswertung der erfassten ersten Prozessmessdaten, einer neuen Einbauposition und/oder einer neuen Parametrierung eines ersten Feldgeräts (110), um das Messergebnis des ersten Feldgeräts zu verbessern.

16. Verfahren nach Anspruch 15, wobei das Verfahren ferner aufweist:
Verwenden und/oder Trainieren eines auf maschinellem Lernen und/oder künstlicher Intelligenz basierenden Algorithmus zum Auswerten der erfassten ersten Prozessmessdaten und/oder zum Bestimmen der neuen Einbauposition und/oder der neuen Parametrierung des ersten Feldgeräts (110).

17. Programmelement, das, wenn es auf einer Rechenanordnung (111, 141, 120, 130) eines Messsystems (100) ausgeführt wird, das Messsystem (100) dazu veranlasst, das Verfahren nach Anspruch 15 oder 16 auszuführen.

18. Computerlesbares Medium, auf dem ein Programmelement Nach Anspruch 17 gespeichert ist.

19. Trainingsdaten zum Trainieren eines auf maschinellem Lernen und/oder künstlicher Intelligenz basierenden Algorithmus zur Verwendung durch ein Messsystem (100) im industriellen oder privaten Umfeld, das Messsystem (100) aufweisend ein erstes Feldgerät (110), eingerichtet zur Erfassung von ersten Prozessmessdaten, und eine Rechenanordnung (111, 141, 120, 130), eingerichtet zur Auswertung der erfassten ersten Prozessmessdaten, wobei die Rechenanordnung (111, 120, 130) dazu eingerichtet ist, anhand der Auswertung der erfassten ersten Prozessmessdaten eine neue Einbauposition und/oder eine neue Parametrierung des ersten Feldgeräts (110) zu bestimmen, um das Messergebnis zu verbessern:
wobei die Trainingsdaten auf den erfassten ersten Prozessmessdaten basieren, zum Trainieren des auf maschinellem Lernen und/oder künstlicher Intelligenz basierenden Algorithmus zum Bestimmen der neuen Einbauposition und/oder der neuen Parametrierung des ersten Feldgeräts (110).
